# EUROPÄISCHE PATENTANMELDUNG

(11) **EP 1 281 587 A2**
(43) Veröffentlichungstag der Anmeldung: **05.02.2003**
(21) Anmeldenummer: 02015580.0
(22) Anmeldetag: 12.07.2002
(51) Int. Cl.: B60R 21/26

(54) **Zünder für einen Gasgenerator**

(30) Priorität: 02.08.2001 DE 20112834 U
(71) Anmelder: TRW Occupant Restraint Systems GmbH & Co. KG, 73553 Alfdorf (DE)
(72) Erfinder: Wier, Franz, 73571 Göggingen (DE)
(74) Vertreter: Sties, Jochen, Dipl.-Ing.

(57) **Zusammenfassung**

Ein Zünder eines Gasgenerators mit einer Zünderpille (12) und einer Schnittstelle (14), wobei zwischen der Zünderpille und der Schnittstelle ein elektrisches Verbindungselement (16) angeordnet ist, ist dadurch gekennzeichnet, daß das Verbindungselement ein gestanztes Metallelement ist.

## Beschreibung

Die Erfindung betrifft einen Zünder für einen Gasgenerator mit einer Zünderpille und einer Schnittstelle, wobei zwischen der Zünderpille und der Schnittstelle ein elektrisches Verbindungselement angeordnet ist.

Der Zünder dient dazu, einen über Anschlußstifte gelieferten elektrischen Impuls derart umzusetzen, daß eine gaserzeugende Ladung des Gasgenerators gezündet wird. Die von der gaserzeugenden Ladung bereitgestellte Menge Druckgas kann dann beispielsweise dazu verwendet werden, den Kolben eines Linearantriebs eines Gurtstraffers in einem Sicherheitsgurtsystem eines Kraftfahrzeugs anzutreiben oder einen Gassack eines Airbagrückhaltesystems eines Kraftfahrzeugs zu entfalten.

Insbesondere muß beim Zünder eines Gasgenerators darauf geachtet werden, daß die Verbindung zwischen der Zünderpille und der Schnittstelle, welche beispielsweise der Aufnahme eines fahrzeugseitigen Steckerelements dienen kann, sicher ausgeführt wird. Des weiteren ist darauf zu achten, daß die Schnittstelle leicht zugänglich ist, so daß das fahrzeugseitige Steckerelement leicht an die Schnittstelle angeschlossen werden kann.

Zu diesem Zweck ist gemäß der Erfindung bei einem Zünder der eingangs genannten Art vorgesehen, daß das Verbindungselement ein gestanztes Metallelement ist. Auf diese Weise wird erreicht, daß die Schnittstelle so positioniert werden kann, daß sie für die Montage des Steckerelements leicht erreichbar ist und Verbindung zwischen der Zünderpille und die Schnittstelle dennoch zuverlässig aufgebaut ist. Das gestanzte Metallelement ist hierbei besonders vorteilhaft, weil es im Unterschied zu konventionellen Drähten deutlich stabiler ist und damit eine sicherere Verbindung gewährleistet als mit Drähten. Auf der anderen Seite erlaubt sie jedoch auch eine flexible Positionierung der Schnittstelle, wie sie bei einer starren Kontaktierung, beispielsweise bei einem fest vergossenen Stecker- oder Buchsenelement, nicht möglich ist. Die Schnittstelle kann daher von der Zünderpille entfernt positioniert werden, wodurch die Zugänglichkeit des Steckers verbessert wird. Damit kann auch die Geometrie des Gurtstraffers oder des Airbags neu festgelegt werden. Dies Konstruktion schafft also sowohl technische als auch logistische Vorteile. Damit wird wiederum eine deutliche Kostenreduzierung erreicht.

Gemäß einer bevorzugten Ausführungsform der Erfindung weist das Verbindungselement Stanzlöcher auf. Dadurch wird zum einen eine Materialeinsparung für das Verbindungselement erreicht, zum anderen wird das Verbindungselement noch flexibler, ohne daß die elektrischen Eigenschaften des Verbindungselements sich verschlechtern.

Vorzugsweise wird das Verbindungselement in eine Isolation eingebettet. Diese Isolation kann beispielsweise durch Umspritzen des Verbindungselements hergestellt werden, wodurch eine deutlich bessere elektrische Isolierung, beispielsweise gegenüber konventionellen elektrischen Verbindungsdrähten, erreicht wird. Zum anderen ermöglicht das Umspritzen des Verbindungselements einen erheblichen Qualitäts- und Kostenvorteil gegenüber konventionellen Lösungen. Außerdem bleibt hier das Verbindungselement gegenüber konventionellen Einbettungsverfahren mit fest vergossenen Stecker- oder Buchsenelementen weiter flexibel.

Besonders vorteilhaft ist es, wenn das Verbindungselement und die Schnittstelle zusammen einstückig ausgeführt sind. Es ist dann möglich, in einem Arbeitsschritt Verbindungselement und Schnittstelle zusammen zu fertigen, was deutliche Kosteneinsparungen erlaubt. Zum anderen reduziert sich der Montageaufwand, da die Verbindung zwischen Verbindungselement und Schnittstelle nicht extra konfektioniert werden muß.

In einer weiteren besonders bevorzugten Ausführungsform wird die Isolation zusammen mit einem Schnittstellengehäuse einstückig ausgeführt Dies ist z.B. dadurch möglich, daß das Verbindungselement und die Schnittstelle zusammen umspritzt werden und' damit die Isolation und das Schnittstellengehäuse ein Bauteil bilden. Dies bedeutet einen erheblichen Kostenvorteil, da hier zum einen nur ein Bauteil gefertigt werden muß und zum anderen keine zusätzliche Abdichtung zwischen der Isolation des Verbindungselements und dem Schnittstellengehäuse erforderlich ist.

Besonders vorteilhaft ist es, wenn die Länge des Verbindungselements mindestens 20 mm beträgt, da dann eine besonders einfache und vielfältige Verlegung der Steckverbindung weg von der Zünderpille möglich ist.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer Schnittansicht einen Gasgenerator nach dem Stand der Technik;
- Figur 2 einen Schnitt durch einen Zünder; und
- Figur 3 eine Detailansicht eines Verbindungselements.

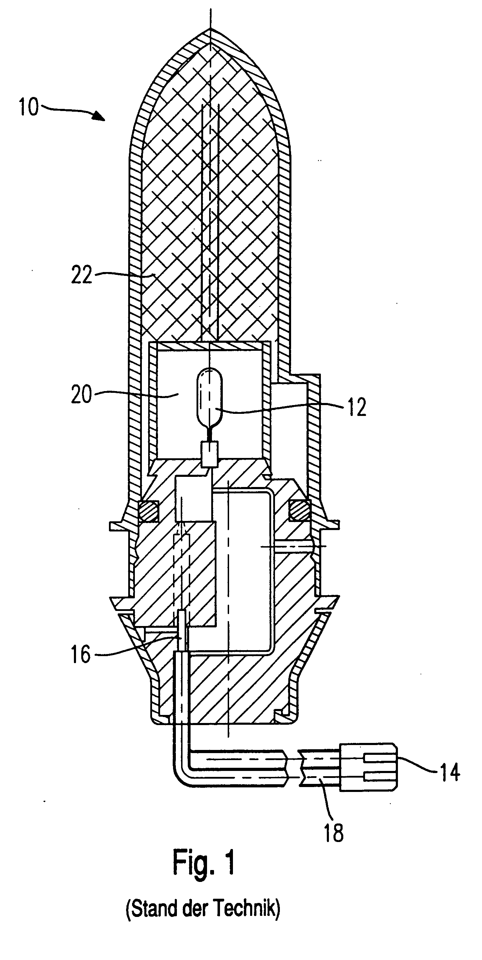

In Figur 1 ist ein Gasgenerator 10 nach dem Stand der Technik dargestellt. Der Gasgenerator umfaßt einen Zünder, der aus einer Zünderpille 12, einer elektrischen Schnittstelle 14 und einem die Zünderpille mit der Schnittstelle elektrisch verbindenden Verbindungselement 16 besteht. Die Schnittstelle ist hier als Stecker ausgeführt ist und das Verbindungselement 16 wird durch ein einfaches elektrisches Kabel gebildet, das von einer elektrisch nicht leitenden Isolation 18 umgeben ist. In Bezug auf Figur 1 oberhalb der Zünderpille 12 ist eine Boosterladung 20, über dieser wiederum eine gaserzeugende Treibladung 22 angeordnet.

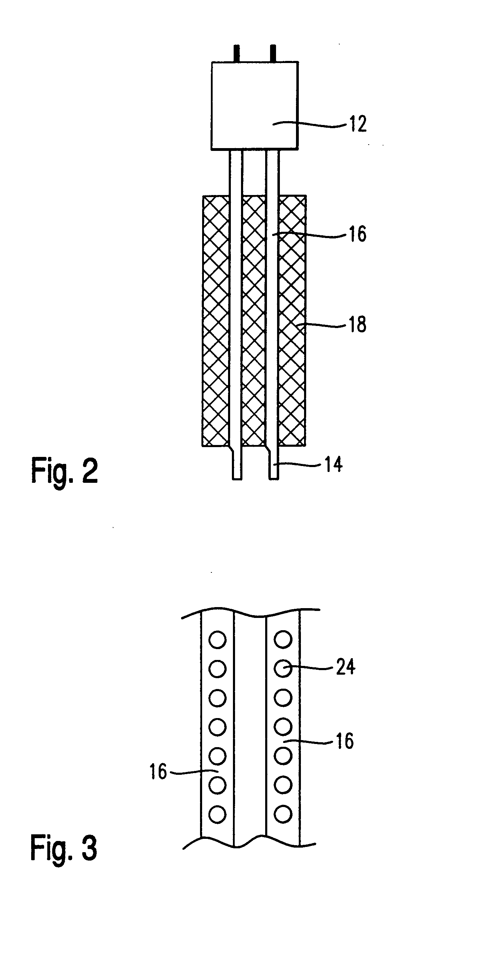

In Figur 2 ist ein erfindungsgemäßer Zünder mit Zünderpille 12, Verbindungselement 16 und Schnittstelle 14 dargestellt. Das Verbindungselement 16 ist hier ein gestanztes Metallelement, das von der Isolation 18 umgeben ist. Die elektrische Schnittstelle 14 wird hier durch zwei einfache Steckkontakte gebildet, die einstückig zusammen mit dem Verbindungselement 16 ausgeführt sind. Zu diesem Zweck wird das Ende des Verbindungselements 16 so schmal wie ein herkömmlicher Steckerstift ausgeführt.

In Figur 3 ist eine Detailansicht des gestanzten Verbindungselements 16 mit Stanzlöchern 24 zu sehen.

Zur Kontaktierung der Zünderpille 12 wird zuerst das Verbindungselement 16 zusammen mit der Schnittstelle 14 einstückig aus einem Metallstück ausgestanzt und mit der Zünderpille verbunden. In einem weiteren Schritt wird die Verbindung dann ganz oder teilweise mit einem isolierenden Material umspritzt. Es ist so möglich, die Isolation 18 allein zu konfektionieren, wie dies in Figur 2 zu sehen ist, oder in einer weiteren (nicht dargestellten) Ausführungsform Schnittstellengehäuse und Isolation einstückig auszuführen. Der Umspritzvorgang kann dabei sowohl vor als auch nach dem Einbau von Zünder in das Gurtstraffergehäuse, das Gehäuse des Gasgenerators des Airbags oder andere Sicherheitseinrichtungen erfolgen.

## Patentansprüche

1. Zünder eines Gasgenerators mit einer Zünderpille (12) und einer Schnittstelle (14), wobei zwischen der Zünderpille und der Schnittstelle ein elektrisches Verbindungselement (16) angeordnet ist, **dadurch gekennzeichnet, daß** das Verbindungselement ein gestanztes Metallelement ist.

2. Zünder nach Anspruch 1, **dadurch gekennzeichnet, daß** das Verbindungselement (16) Stanzlöcher (24) aufweist.

3. Zünder nach Anspruch 1 oder 2, **dadurch gekennzeichnet, daß** das Verbindungselement (16) in eine Isolation (18) eingebettet ist.

4. Zünder nach einem der vorhergehenden Ansprüche, **dadurch gekennzeichnet, daß** das Verbindungselement (16) und die Schnittstelle (14) zusammen einstückig ausgeführt sind.

5. Zünder nach einem der vorhergehenden Ansprüche, **dadurch gekennzeichnet, daß** die Isolation (18) zusammen mit einem Schnittstellengehäuse einstückig ausgeführt ist.

6. Zünder nach einem der vorhergehenden Ansprüche, **dadurch gekennzeichnet, daß** die Länge des Verbindungselements (16) mindestens 20 mm beträgt.
